# EUROPÄISCHE PATENTSCHRIFT

(11) **EP 0 618 233 B1**
(45) Veröffentlichungstag und Bekanntmachung des Hinweises auf die Patenterteilung: **28.04.1999**
(21) Anmeldenummer: 94104079.2
(22) Anmeldetag: 16.03.1994
(51) Int. Cl.: C08B 37/08

(54) **Verfahren zur Herstellung und Aufarbeitung von in wässrigem Medium löslichen N-Hydroxyalkylchitosanen**
Process for the preparation and treatment of N-hydroxyalkylchitosane soluble in aqueous medium
Procédé pour la préparation et le traitement de dérivés N-hydroxyalcoyle de chitosane solubles dans un milieu aqueux

(30) Priorität: 27.03.1993 DE 4310088
(43) Veröffentlichungstag der Anmeldung: 05.10.1994
(73) Patentinhaber: Clariant GmbH, 65929 Frankfurt am Main (DE)
(72) Erfinder: Dönges, Reinhard, Dr., D-65812 Bad Soden (DE); Reichel, Diethart, Dr., D-64291 Darmstadt (DE); Kessler, Birgit, D-60529 Frankfurt (DE)

(56) Entgegenhaltungen:
- GB-A- 978 495
- PATENT ABSTRACTS OF JAPAN Bd. 16, Nr. 556 (C-1007) 26 November 1992 & JP-A-04 216 801 (DAINICHISEIKA COLOR & CHEM) 06 August 1992 & DATABASE WPI Week 9238, Derwent Publications Ltd., London, GB; AN 92-311912 & JP-A-4 216 801 (DAINICHISEIKA COLOR & CHEM MFG) 19 Dezember 1992
- PATENT ABSTRACTS OF JAPAN Bd. 7, Nr. 022 (C-148) 28 Januar 1983 & JP-A-57 180 602 (NIPPON SODA KK) 06 November 1982
- PATENT ABSTRACTS OF JAPAN Bd. 7, Nr. 209 (C-186) 14 September 1983 & JP-A-58 109 502 (MITSUBISHI ACETATE KK) 29 Juni 1983 & DATABASE WPI Week 8332, Derwent Publications Ltd., London, GB; AN 83-731250 & JP-A-58 109 502 (MITSUBISHI ACETATE CO LTD AND MITSUBISHI RAYON CO LTD) 29 Juni 1983
- DATABASE WPI Week 9143, Derwent Publications Ltd., London, GB; AN 91-349972 & JP-A-3 234 702 (DAINICHISEIKA COLOR & CHEM MFG) 18 Oktober 1991

## Beschreibung

Chitosan ist ein Polysaccharid aus 2-Amino-2-deoxy-glucoseeinheiten. Die Herstellung erfolgt üblicherweise aus Chitin, einem Polysaccharid aus 2-N-Acetylamino-2-deoxy-glucoseeinheiten über alkalische Verseifung der N-Acetylgruppen. Chitin ist ein Naturprodukt und als Gerüstsubstanz in Krustentieren und Pilzgeflechten enthalten. Im kommerziell erhältlichen Chitosan sind normalerweise 60 bis 90 % der ursprünglich in Chitin vorhandenen N-Acetylgruppen verseift.

Bei den bisher üblichen Verfahren zur Herstellung von Chitosanderivaten wird das Chitosan in Gegenwart von Wasser, organischen Lösungsmitteln oder in wäßrig-organischer Phase nach an sich aus dem Stand der Technik für die Umsetzung mit Polysacchariden oder Aminen befähigten Reagenzien umgesetzt. Bevorzugt wird die Umsetzung in Suspension vorgenommen. Die Umsetzungen können sowohl ohne Katalysator als auch im sauren Bereich in Anwesenheit saurer Katalysatoren (z.B. Essigsäure, Salzsäure) oder im alkalischen Bereich in Gegenwart von Basen (z.B. Alkalihydroxide oder tertiäre Amine) durchgeführt werden.

Bei Einsatz von alkylierenden Reagenzien, z.B. Alkylenoxiden in neutralem oder saurem Milieu erfolgen bevorzugt N-Derivatisierung, in basischem Milieu bevorzugt O-Derivatisierung des Chitosans.

Die Aufarbeitung der Chitosanderivate erfolgt üblicherweise durch Extraktion der Nebenprodukte, sowie der bei der Reaktion verwendeten und nicht verbrauchten Reagenzien und/oder des Mittels, in dem die Reaktion durchgeführt wurde.

Die EP-B-0 224 045 nennt ein Verfahren zur Herstellung von N-Hydroxypropylchitosan, das dadurch gekennzeichnet ist, daß man ein Chitosan, bestehend aus 60 bis 96 % entacetyliertem Chitin, oder dessen Salz in Gegenwart saurer Katalysatoren, z.B. Salzsäure, in einer Dispersion aus überschüssigem Propylenoxid und Wasser zur Reaktion bringt. Nach beendeter Reaktion entfernt man das überschüssige Alkylierungsmittel, trennt eventuell vorhandene unlösliche Anteile aus der Lösung des Chitosanderivates durch Filtration ab, neutralisiert gegebenenfalls, engt am Rotationsverdampfer ein und fällt das Chitosanderivat in Aceton aus. Um eingeschlossene Propylenglykole zu entfernen, wird das gefällte Derivat mittels einer Mischsirene fein dispergiert; der Niederschlag wird auf einer Glassinternutsche gesammelt, gründlich mit Aceton gewaschen und anschließend im Vakuumtrockenschrank bei 50°C getrocknet.
Das beschriebene Herstellungsverfahren sieht das Ausfällen und die Aufarbeitung des Produktes mit einem leicht brennbaren organischen Lösungsmittel (Aceton) vor. Nachteilig an diesem Verfahren ist, daß wegen des Einsatzes von leicht brennbaren Lösungsmitteln das Verfahren nur schwer im Bereich der Produktion eingesetzt werden kann. Weiterhin nachteilig für die Wirtschaftlichkeit eines solchen Verfahrens ist die erforderliche teure säurebeständige Ausrüstung des Reaktors.

Die japanische Offenlegungsschrift Nr. 3-234702 (Anmelder: Dainichi Seika Colour & Chemicals Mfg. Co., Ltd.) beschäftigt sich mit wasserunlöslichem bzw. in Wasser/Alkohol-Gemischen unlöslichem N-Hydroxypropylchitosan mit einem durchschnittlichen Substitutionsgrad (DS) im Bereich von 0,1 bis 1,2, das sich durch einen geringen Grad an Verunreinigungen auszeichnet, sowie dessen Herstellung.
Bei der Herstellung wird das zerkleinerte Chitosan in einem Reaktionsmedium dispergiert. Geeignete Reaktionsmedien sind Wasser oder ein Gemisch aus Wasser und einem wasserlöslichen organischen Lösungsmittel, z.B. Isopropanol. Um ein möglichst homogenes Produkt zu erhalten, wird das Chitosan in dem Reaktionsmedium in einer Teilchengröße von 50 bis 1000 µm dispergiert. Die Konzentration der Dispersion beträgt üblicherweise 5 bis 20 Gewichtsteile Chitosan/100 Gewichtsteile Reaktionsmedium. Die Hydroxypropylierung des vorstehend beschriebenen zerkleinerten Chitosans muß in Dispersion durchgeführt werden. Die Menge an eingesetztem Propylenoxid beträgt üblicherweise 100 bis 800 Gewichtsteile bezogen auf 100 Gewichtsteile Chitosan. Die Reaktionsdauer beträgt im allgemeinen von 10 bis 50 Stunden. Während dieser Zeit wird die Reaktionstemperatur allmählich erhöht und die Umsetzung im Bereich des Siedepunktes des Reaktionsmediums bzw. des Propylenoxids durchgeführt. Es ist erfindungswesentlich, daß die Hydroxypropylierung abgebrochen wird, wenn ein durchschnittlicher Substitutionsgrad (DS) von 1,2 erreicht wird. Nach erfolgter Hydroxypropylierung wird das Reaktionsprodukt abfiltriert und mit einer Waschlösung, z.B. Wasser oder einem Wasser/Alkohol-Gemisch, gewaschen, wobei die wasserlöslichen Verunreinigungen fast vollständig entfernt werden. Das so hergestellte N-Hydroxypropylchitosan ist unlöslich in wäßrigen Lösemitteln, wie Wasser und Wasser/Alkohol-Gemischen. Nachteilig an diesem Verfahren ist, daß die vorgeschlagene Reinigung in Form einer Extraktion der Nebenprodukte im Hinblick auf wasserlösliche N-Hydroxyalkylchitosane keine Anwendung finden kann.

Aufgabe der vorliegenden Erfindung ist es, ausgehend von dem vorstehend beschriebenen Stand der Technik, ein Verfahren zur Herstellung und Aufarbeitung von wasserlöslichen N-Hydroxyalkylchitosanen zur Verfügung zu stellen, bei dem die hergestellten Produkte einen geringen Verunreinigungsgrad besitzen, das ohne den Einsatz leicht brennbarer Lösemittel auskommt und bevorzugt im Bereich der industriellen Produktion eingesetzt werden kann.

Überraschenderweise hat sich gezeigt, daß durch Trocknung ohne vorhergehende Extraktion der wäßrigen N-Hydroxyalkylchitosane im Anschluß an die Herstellung, z.B. mittels Kontakttrocknung oder Konvektionstrocknung, Produkte mit einem geringen Grad an Verunreinigung, insbesondere an Alkylenoxid, erhalten werden, und dieses Verfahren gerade für den Bereich der Produktion geeignet ist.

Die Durchführung dieser Trocknung ist sinnvoll bei Abwesenheit von Salzen, die durch notwendige Neutralisation nach Zusatz von sauren oder basischen Katalysatoren anfallen würden. Bei salzhaltigen Reaktionsgemischen führt die erfindungsgemäße Trocknung zu salzhaltigen Trockenprodukten.

Gegenstand der vorliegenden Erfindung ist somit ein Verfahren zur Herstellung und Aufarbeitung von in wäßrigem Medium löslichen N-Hydroxyalkylchitosanen, umfassend die Maßnahmen
- Dispergieren von Chitosan in Wasser,
- nachfolgenden Hydroxyalkylierung des dispergierten Chitosans und
- anschließende Aufarbeitung des N-Hydroxyalkylchitosans,
   dadurch gekennzeichnet, daß das Verhältnis Chitosan zu eingesetztem Hydroxyalkylierungsreagenz 1:3-8 Mol/Mol, bezogen auf die Chitosan-Monomereinheit beträgt, daß die Hydroxyalkylierung bis zu einem durchschnittlichen Substitutionsgrad (DS) von 2,0 durchgeführt wird und die Aufarbeitung des N-Hydroxyalkylchitosans durch Trocknung erfolgt.

Das erfindungsgemäße Verfahren wird im folgenden beschrieben.

Als Ausgangsstoff kann grundsätzlich jedes Chitosan eingesetzt werden. Vorzugsweise werden jedoch Chitosane eingesetzt, die zu 40 bis 96 %, bezogen auf das Ursprungschitin entacetyliert sind und die einen Durchschnittspolymerisationsgrad (DP) von 100 bis 10000, bevorzugt von 300 bis 8000, aufweisen.
Als wäßriges Medium, in dem das Chitosan suspendiert wird und auch die nachfolgende Hydroxyalkylierung erfolgt, dient vorzugsweise Wasser.

Die Hydroxyalkylierung des zerkleinerten Chitosans wird in Suspension vorgenommen und erfolgt nach bekannten Verfahren. Die Umsetzung kann mit einem oder mehreren Reagenz(ien) durchgeführt werden, die in Kombination oder auch nacheinander eingesetzt werden. Welche Verfahrensschritte dabei angewendet werden müssen, hängt weitgehend davon ab, welche Endprodukte hergestellt werden sollen, und sind leicht herausfindbar. Als Reagenzien finden Epoxide, wie Ethylenoxid, Propylenoxid, Butylenoxid, 1,2-Epoxydodecan, 1,2-Epoxyhexadecan, 2,3-Epoxy-1-propanol und Glycidylether (z.B. (2,3-Epoxy-1-propyl)alkylether) Verwendung. Das Verhältnis Chitosan zu eingesetztem Hydroxyalkylierungsreagenz beträgt üblicherweise 1: 3-8 Mol/Mol, bezogen auf die Chitosan-Monomereinheit.
Nach beendeter Hydroxyalkylierung liegen die Produkte als viskose Lösung vor. Bei Einsatz von wäßrig/organischen Suspensionsmitteln, wie Wasser/Isopropanol-Gemischen wird üblicherweise ein Teil des wäßrigen Mediums entfernt, z.B. durch Destillation.
Bei der Herstellung von N-Hydroxypropylchitosanen findet die Hydroxypropylierung bevorzugt in einer Druckapparatur bei einer Temperatur im Bereich von 60 bis 120°C statt. Die Reaktionszeiten liegen zwischen 1 bis 7 Stunden. Der Einsatz saurer Katalysatoren, wie Essigsäure, Salzsäure oder basischer Katalysatoren, wie Alkalihydroxide oder tertiäre Amine, ist nicht vorgesehen.

Die weitere Aufarbeitung des feuchten N-Hydroxyalkylchitosans erfolgt durch Trocknung. Die bisher übliche Aufarbeitung z.B. in Form einer Extraktion der Nebenprodukte bzw. der bei der Reaktion verwendeten und nicht verbrauchten Reagenzien und/oder des Mittels, in dem die Reaktion durchgeführt wurde, findet nicht statt. Nach beendeter Exraktion ist ein Trocknungsschritt erforderlich.
Mit dem erfindungsgemäßen Verfahren wird ein Extraktionsschritt eingespart.

Geeignete Trocknungsmethoden müssen folgende Kriterien erfüllen:
- Reduzierung des Gehalts an Hydroxyalkylierungsreagenz in dem hergestellten Hydroxypropylchitosan auf weniger als 5 ppm
- Überführung der viskosen Lösung in ein konfektionierbares Produkt
- Erfüllung der produktionstechnischen Sicherheitsaspekte

Als geeignete Trocknungsmethode haben sich die Kontakttrocknung und die Konvektionstrocknung erwiesen.

Bei der Kontakttrocknung wird Wärme von einer Heizfläche an das mit ihr in Kontakt befindliche Gut durch Wärmeleitung übertragen. Durch diese Wärmezufuhr verdampft ein Teil der Gutsfeuchte und entweicht - das Gut wird trockner. Den Dampf transportieren Vakuumpumpe oder Inertgasstrom. Die Kontakttrocknung wird mit den aus dem Stand der Technik bekannten Vorrichtungen durchgeführt. Bevorzugte Ausführungsformen der Kontakttrocknung sind Trocknung mittels Walzentrockner, Taumeltrockner, Tellertrockner, Schwingrinnentrockner, Konustrockner, Dünnschichttrockner, Schaufeltrockner oder Misch-/Knet-Trockner, besonders bevorzugt Walzentrockner.
Die vorstehend genannten Trockner werden in dem Artikel "Im Trend der Zeit" (Kontakttrockner für die Chemie) Franz Thurner, Chemische Industrie 1/92, S. 42-46 beschrieben.

Bei der Walzentrocknung werden die nach der Hydroxyalkylierung erhaltenen Gele üblicherweise über eine Pumpe auf die Walzen gefördert. Die Optimaltemperatur der Walzen liegt bei 90 bis 140°C.

Die Konvektionstrocknung erfolgt bevorzugt durch Sprühtrocknung. Bei der Sprühtrocknung wird das Feuchtprodukt in einem Trocknungsturm zerstäubt. Für die Zerstäubung können Einstoffdüsen, Zweistoffdüsen oder Scheibenzerstäuber eingesetzt werden.
Durch Kontakt mit dem erhitzten Trocknungsgas (Luft, N₂) erfolgt die Verdampfung des Lösungsmittelgemisches (Eintrittstemperatur des Trocknungsgases 150 - 350°C). Dabei kann das Produkt auch auf schon getrocknet vorgelegten Produktteilchen niedergeschlagen werden (Sprühgranulierung).

Durch die Trocknung werden Festprodukte erhalten, die
a) Restfeuchtigkeiten kleiner 5 Gew.-% aufweisen,
b) in allen Fällen Restepoxidgehalte kleiner 5 ppm aufweisen,
c) je nach Trocknungsbedingungen zwischen 4 und 17 Gew.-% 1,2-Alkylenglykol enthalten und
d) im Anschluß an die Trocknung einfach mahlbar sind.

In den folgenden Beispielen wird die erfindungsgemäße Herstellung und Aufarbeitung (Trocknung) der N-Hydroxyalkylchitosane näher beschrieben.

### Herstellungsbeispiele:

Erläuterung von Abkürzungen:
- PG: = 1,2-Propylenglykol
- DPG: = Dipropylenglykol
- HP-Chit: = Hydroxypropylchitosan
- Chit: = Chitosan
- IPA: = Isopropylalkohol
- PO: = Propylenoxid (1,2-Epoxypropan)
- E-Wasser: = Entionisiertes Wasser

### Beispiel 1:

Hydroxypropylierung von Chitosan (Reaktion in Wasser)
In einem 50-l-Reaktor werden 2,0 kg Chitosan sowie 13,0 kg E-Wasser vorgelegt. Unter Mischen werden nach Inertisierung (Entfernen des Sauerstoffs im Reaktionsgefäß durch Einleiten von Stickstoff) 3,65 kg Propylenoxid zudosiert, auf 100°C (Innentemperatur) aufgeheizt und 6 Stunden bei 100°C gehalten. Nach Abblasen des Restdrucks wird auf ca. 40°C abgekühlt und der Reaktorinhalt ausgetragen.
Ausbeute: 18,3 kg einer wäßrigen Reaktionsmischung folgender Zusammensetzung (Gew.-%):

| | |
|---|---|
| H₂O | 70,3 |
| PG | 13,3 |
| DPG | 1,1 |
| HP-Chit | 15,3 mit DS_{NC3H6OH} = 1,9 |
| PO | 130 ppm |

### Beispiel 2: = Vergleichsbeispiel.

Hydroxypropylierung von Chitosan (Reaktion in Isopropylalkohol/Wasser)
In einem 50-l-Reaktor werden 2,0 kg Chitosan sowie 6,0 kg E-Wasser und 10,0 kg 100 %iger Isopropylalkohol vorgelegt. Unter Mischen werden nach Inertisierung 3,65 kg Propylenoxid zudosiert, auf 100°C (Innentemperatur) aufgeheizt und 6 Stunden bei 100°C gehalten. Danach werden ca. 12,6 kg Suspensionsmittel/Wasser-Gemisch abdestilliert, auf ca. 40°C abgekühlt und der Reaktorinhalt ausgetragen.
Ausbeute: 7,78 kg einer wäßrigen Reaktionsmischung folgender Zusammensetzung (Gew.-%):

| | |
|---|---|
| H₂O | 40,1 |
| PG | 10,4 |
| DPG | 0,3 |
| IPA | 13,0 |
| HP-Chit | 36,2 mit DS_{NC3H6OH} = 1,9 |
| PO | 120 ppm |

### Beispiel 3:

Hydroxypropylierung von Chitosan (Reaktion in Wasser bei 120°C)
In einem 50-l-Reaktor werden 2,0 kg Chitosan sowie 13,0 kg E-Wasser vorgelegt. Unter Mischen werden nach Inertisierung 3,65 kg Propylenoxid zudosiert, auf 120°C (Innentemperatur) aufgeheizt und 4,5 Stunden bei 120°C gehalten. Nach Abkühlen auf 40°C wird der Restdruck abgeblasen. Danach wird der Reaktorinhalt ausgetragen.
Ausbeute: 17,9 kg einer wäßrigen Reaktionsmischung folgender Zusammensetzung (Gew.-%):

| | |
|---|---|
| H₂O | 67,5 |
| PG | 13,2 |
| DPG | 0,8 |
| HP-Chit | 18,5 mit DS_{NC3H6OH} = 1,9 |
| PO | 1,5 ppm |

### Beispiel 4: = Vergleichsbeispiel

Hydroxypropylierung von Chitosan (Reaktion in Isopropylalkohol/Wasser bei 120°C)
In einem 50-l-Reaktor werden 2,0 kg Chitosan sowie 6,0 kg E-Wasser und 10,0 kg 100 %iger Isopropylalkohol vorgelegt. Unter Mischen werden nach Inertisierung 3,65 kg Propylenoxid zudosiert, auf 120°C (Innentemperatur) aufgeheizt und 6 Stunden bei 120°C gehalten. Danach werden ca. 11,3 kg Suspensionsmittel/Wasser-Gemisch abdestilliert, 4,0 kg E-Wasser zugegeben und 30 min gemischt. Nach Abkühlen auf ca. 40°C wird der Reaktorinhalt ausgetragen.
Ausbeute: 13,42 kg einer wäßrigen Reaktionsmischung folgender Zusammensetzung (Gew.-%):

| | |
|---|---|
| H₂O | 53,0 |
| IPA | 9,8 |
| HP-Chit | 27,3 mit DS_{NC3H6OH} = 1 9 |
| DPG | 0,4 |
| PG | 9,5 |
| PO | 51 ppm |

### Trocknungsbeispiele:

### Beispiel 5:

Walzentrocknung der wäßrigen Reaktionsgemische der Beispiele 1 bis 4 Das Reaktionsgemisch wird aus einer beheizbaren Produktvorlage zwischen die beiden Walzen gepumpt. Die gegenläufige Rotation fördert das Feuchtgut durch einen verstellbaren Walzenspalt zu den beiden Schabmessern, an denen die Abnahme des Trockenproduktes von den Walzen erfolgt. Das Trockenprodukt wird in einer Wanne gesammelt.
Der Walzentrockner kann unter Normaldruck wie auch im Vakuum betrieben werden. Das Beheizen des Walzentrockners erfolgt über eine Druckwasserbeheizung.

**Tabelle 1**

| Ergebnisse der Walzentrocknung | | | | | |
|---|---|---|---|---|---|
| eingesetztes Reaktionsgemisch | | Bsp. 1 | Bsp. 2 | Bsp. 3 | Bsp. 4 |
| Walzentemperatur | °C | 110 | 110 | 120 | 120 |
| Systemdruck | mbar | 1013 | 1013 | 1013 | 1013 |

| Ausgangskonzentrationen | | | | | |
|---|---|---|---|---|---|
| Hydroxypropylchitosan | Gew.-% | 15,3 | 36,2 | 18,5 | 27,3 |
| Wasser | Gew.-% | 70,3 | 40,1 | 67,5 | 53,0 |
| Propylenglykol | Gew.-% | 13,3 | 10,4 | 13,2 | 9,5 |
| Dipropylenglykol | Gew.-% | 1,1 | 0,3 | 0,7 | 0,4 |
| Isopropylalkohol | Gew.-% | 0 | 13,0 | 0 | 9,8 |

| Endkonzentrationen (Trockenprodukt) | | | | | |
|---|---|---|---|---|---|
| Wasser | Gew.-% | 3,6 | 3,6 | 2,5 | 4,6 |
| Propylenglykol | Gew.-% | 16,5 | 11,0 | 8,7 | 14,6 |
| Dipropylenglykol | Gew.-% | 2,3 | 0,7 | 2,1 | 1,8 |
| Hydroxypropylchitosan | Gew.-% | 77,6 | 84,7 | 86,7 | 79,0 |
| Propylenoxid | ppm | <5 | <5 | <5 | <5 |
| Rückstand (20 µ-Filter) | Gew.-% | <0,1 | <0,1 | <0,01 | 0,05 |

### Beispiel 6:

Hydroxypropylierung von Chitosan (Reaktion in Wasser bei 120°C). In einem 50-l-Reaktor werden 2,0 kg Chitosan sowie 13,0 kg E-Wasser vorgelegt. Unter Mischen werden nach Inertisierung 3,65 kg Propylenoxid zudosiert, auf 120°C (Innentemperatur) aufgeheizt und 3 Stunden bei 120°C gehalten. Nach Abkühlen auf 40°C wird der Restdruck abgeblasen. Danach wird der Reaktorinhalt ausgetragen.
Ausbeute: 17,9 kg einer wäßrigen Reaktionsmischung folgender Zusammensetzung (Gew.-%):

| | |
|---|---|
| H₂O | 67,5 |
| PG | 13,9 |
| DPG | 0,8 |
| HP-Chit | 17,8 mit DS_{NC3H6OH} = 1,8 |
| PO | 19 ppm |

### Beispiel 7:

### Sprühtrocknung von wäßrigem Hydroxypropylchitosan

Das flüssige Reaktionsgemisch wird mittels einer Pumpe zum Zerstäuber gefördert. Das Trocknungsgas Stickstoff tritt über eine Elektroheizung mit der gewünschten Temperatur in den Luftverteiler des Sprühturms ein. Am Boden des Turms wird das abgekühlte und mit Trockenprodukt beladene Trocknungsgas durch einen Abluftventilator abgesaugt. Im Zyklonabscheider und in der nachgeschalteten Filterkammer wird das Gas vom Feststoff getrennt.

Für die Sprühtrocknungsversuche 7a - 7d wurden folgende Verdünnungen mit Wasser vorgenommen:
- 7a:: 1 Gew.-Teil Reaktionsmischung aus Bsp. 6
+ 1 Gew.-Teil Wasser
- 7b:: 2 Gew.-Teile Reaktionsmischung aus Bsp. 6
+ 1 Gew.-Teil Wasser
- 7c,d:: 3 Gew.-Teile Reaktionsmischung aus Beispiel 6
+ 1 Gew.-Teil Wasser

## Patentansprüche

1. Verfahren zur Herstellung und Aufarbeitung von in Wasser löslichen N-Hydroxyalkylchitosanen, umfassend die Maßnahmen
- Dispergieren von Chitosan in Wasser,
- nachfolgenden Hydroxyalkylierung des dispergierten Chitosans und
- anschließende Aufarbeitung des N-Hydroxyalkylchitosans,
dadurch gekennzeichnet, daß das Verhältnis Chitosan zu eingesetztem Hydroxyalkylierungsreagenz 1:3-8 Mol/Mol, bezogen auf die Chitosan-Monomereinheit beträgt, daß die Hydroxyalkylierung bis zu einen` durchschnittlichen Substitutionsgrad (DS) von 2,0 durchgeführt wird und die Aufarbeitung des N-Hydroxyalkylchitosans durch Trocknung erfolgt.

2. Verfahren nach Anspruch 1, dadurch gekennzeichnet, daß die Hydroxyalkylierung bis zu einem DS von 1,5 bis 2 durchgefürt wird.

3. Verfahren nach Anspruch 1, dadurch gekennzeichnet, daß das eingesetzte Chitosan zu 40 bis 96 %, bezogen auf das Ursprungschitin, entacetyliert ist und einen Durchschnittspolymerisationsgrad (DP) von 100 bis 10.000 aufweist.

4. Verfahren nach Anspruch 1, dadurch gekennzeichnet, daß das Ursprungschitin einen DP von 300 bis 8.000 aufweist.

5. Verfahren nach Anspruch 1, dadurch gekennzeichnet, daß das Aufschlagverhältnis Wasser zu Chitosan 4-12:1 beträgt.

6. Verfahren nach Anspruch 1, dadurch gekennzeichnet, daß zur Hydroxyalkylierung Epoxide eingesetzt werden.

7. Verfahren nach Anspruch 1, dadurch gekennzeichnet, daß die Trocknung mittels Kontakttrocknung erfolgt.

8. Verfahren nach Anspruch 1, dadurch gekennzeichnet, daß die Trocknung mittels Walzentrocknung erfolgt.

9. Verfahren nach Anspruch 8, dadurch gekennzeichnet, daß die Walzentrocknung bei einer Walzentemperatur im Bereich von 90 bis 140°C erfolgt.

10. Verfahren nach Anspruch 1, dadurch gekennzeichnet, daß die Trocknung mittels Konvektionstrocknung erfolgt.

11. Verfahren nach Anspruch 1, dadurch gekennzeichnet, daß die Trocknung mittels Sprühtrocknung erfolgt.

12. Wasserlöslicher Hydroxyalkylchitosanether, erhältlich nach dem Verfahren gemäß Anspruch 1, dadurch gekennzeichnet, daß der Hydroxyalkylchitosanether bis zu einem durchschnittlichen Substitutionsgrad (DS) von 2,0 hydroxyalkyliert ist und einen Restepoxidgehalt kleiner 5 ppm aufweist.

## Claims

1. A process for the preparation and work-up of water-soluble N-hydroxalkylchitosans comprising the measures
- dispersion of chitosan in water,
- subsequent hydroxyalkylation of the dispersed chitosan and
- subsequent work-up of the N-hydroxyalkylchitosan,
wherein the ratio of chitosan to the hydroxyalkylation reagent used is 1:3-8 mol/mol, based on the chitosan monomer unit, the hydroxyalkylation is carried out up to an average degree of substitution (DS) of 2.0 and the work-up of the N-hydroxyalkylchitosan is performed by drying.

2. The process as claimed in claim 1, wherein the hydroxyalkylation is carried out up to a DS of from 1.5 to 2.

3. The process as claimed in claim 1, wherein the chitosan used is deacetylated by 40 to 96%, based on the original chitin, and has an average degree of polymerization (DP) from 100 to 10,000.

4. The process as claimed in claim 1, wherein the original chitin has a DP of from 300 to 8,000.

5. The process as claimed in claim 1, wherein the ratio of water to chitosan is 4-12:1.

6. The process as claimed in claim 1, wherein epoxides are used for the hydroxyalkylation.

7. The process as claimed in claim 1, wherein the drying is carried out by contact drying.

8. The process as claimed in claim 1, wherein the drying is carried out by roller drying.

9. The process as claimed in claim 8, wherein the roller drying is carried out at a roller temperature in the range from 90 to 140°C.

10. The process as claimed claim 1, wherein the drying is carried out by convection drying.

11. The process as claimed in claim 1, wherein the drying is carried out by spray-drying.

12. A water-soluble hydroxyalkylchitosan ether obtainable by the process of claim 1, wherein the hydroxyalkylchitosan ether is hydroxyalkylated up to an average degree of substitution (DS) of 2.0 and has a residual epoxide content below 5 ppm.

## Revendications

1. Procédé pour la préparation et le traitement de N-hydroxyalkylchitosanes solubles dans l'eau, comprenant les étapes consistant a :
- disperser le chitosane dans l'eau
- réaliser ensuite l'hydroxyalkylation du chitosane dispersé et
- traiter ensuite le N-hydroxyalkylchitosane,
caractérisé en ce que, le rapport en moles de chitosane par rapport au réactif d'hydroxyalkylation mis en oeuvre est de 1:3 - 8, rapporté au motif monomère de chitosane, l'hydroxyalkylation est réalisée jusqu'à un degré de substitution moyen (DS) de 2,0 et le traitement du N-hydroxyalkylchisosane est effectué par séchage.

2. Procédé selon la revendication 1, caractérisé en ce que l'hydroxyalkylation est réalisée jusqu'à un DS de 1,5 à 2.

3. Procédé selon la revendication 1, caractérisé en ce que le chitosane mis en oeuvre est désacétylé à hauteur de 40 à 96%, par rapport à la chitine d'origine, et présente un degré de polymérisation moyen (DP) de 100 à 10 000.

4. Procédé selon la revendication 1, caractérisé en ce que la chitine d'origine présente un DP de 300 à 8 000.

5. Procédé selon la revendication 1, caractérisé en ce que le rapport de l'eau au chitosane est de 4 - 12:1.

6. Procédé selon la revendication 1, caractérisé en ce qu'on utilise des époxydes pour l'hydroxyalkylation.

7. Procédé selon la revendication 1, caractérisé en ce qu'on effectue le séchage au moyen d'un séchage par contact.

8. Procédé selon la revendication 1, caractérisé en ce qu'on effectue le séchage au moyen d'un séchage à tambour.

9. Procédé selon la revendication 8, caractérisé en ce qu'on effectue le séchage à tambour à une température de tambour dans l'intervalle de 90 à 140°C.

10. Procédé selon la revendication 1, caractérisé en ce qu'on effectue le séchage au moyen d'un séchage par convection.

11. Procédé selon la revendication 1, caractérisé en ce qu'on effectue le séchage au moyen d'un séchage par pulvérisation.

12. Ether d'hydroxyalkylchitosane hydrosoluble qu'on peut obtenir par le procédé selon la revendication 1, caractérisé en ce que l'éther d'hydroxyalkylchitosane subit une hydroxyalkylation jusqu'à un degré de substitution moyen (DS) de 2,0 et présente une teneur résiduelle en époxyde inférieure à 5 ppm.
